# EUROPÄISCHE PATENTSCHRIFT

(11) **EP 0 427 909 B1**
(45) Veröffentlichungstag und Bekanntmachung des Hinweises auf die Patenterteilung: **13.04.1994**
(21) Anmeldenummer: 90110783.9
(22) Anmeldetag: 07.06.1990
(51) Int. Cl.: B60G 17/01

(54) **Verfahren zur Ermittlung der Querbeschleunigung eines Kraftfahrzeugs**
Procedure to determine the transverse acceleration of a motor vehicle
Méthode pour déterminer l'accélération transversale d'un véhicule automobile

(30) Priorität: 16.11.1989 DE 3938039
(43) Veröffentlichungstag der Anmeldung: 22.05.1991
(73) Patentinhaber: VDO Adolf Schindling AG, D-60487 Frankfurt (DE)
(72) Erfinder: Wallrafen, Werner, D-6231 Sulzbach/Ts (DE)
(74) Vertreter: Klein, Thomas, Dipl.-Ing. (FH)

(56) Entgegenhaltungen:
- GB-A- 2 216 470
- PATENT ABSTRACTS OF JAPAN vol. 13, no. 247 (M-835)(3595) 8 Juni 1989, & JP-A-1 56219 (TOKICO LTD) 3 März 1989,
- PATENT ABSTRACTS OF JAPAN vol. 9, no. 11 (M-351)(1734) 18 Januar 1985, & JP-A-59 160614 (NISSAN JIDOSHA KK) 11 September 1984,

## Beschreibung

Die Erfindung betrifft ein Verfahren zur Ermittlung der Querbeschleunigung eines Kraftfahrzeugs, vorzugsweise für eine elektronisch gesteuerte Fahrwerksdämpfung, bei welchem erste Werte der Querbeschleunigung mit Hilfe eines oder mehrerer Beschleunigungssensoren gemessen werden und zweite Werte der Beschleunigung aus der jeweiligen Fahrzeuggeschwindigkeit und einer aus der Lenkbewegung abgeleiteten Größe berechnet werden.

Gemäß der JP-A-1-56219 ist ein Verfahren zur Ermittlung der Querbeschleunigung eines Kraftfahrzeuges mit einer elektronisch gesteuerten Fahrwerksdämpfung bekannt. Mit Hilfe eines Beschleunigungssensors wird die aktuelle Querbeschleunigung gemessen. Über die Signale eines Fahrzeuggeschwindigkeitssensors und eines Lenkwinkelsensors wird indirekt eine Querbeschleunigung bestimmt. Beide Querbeschleunigungen werden vergl ichen. In Abhängigkeit der Differenz erfolgt dann die Steuerung der Fahrzeugdämpfung.

Zur Messung der Querbeschleunigung eines Kraftfahrzeugs sind Sensoren bekannt. Je nach Bauart weisen derartige Sensoren verschiedene Nachteile, beispielsweise eine große Trägheit oder einen veränderlichen Nullpunkt, auf.

Aufgabe der vorliegenden Erfindung ist es, ein Verfahren zur Ermittlung der Querbeschleunigung eines Kraftfahrzeugs anzugeben, welches die Verwendung preiswerter Sensoren gestattet und trotzdem zuverlässig und genau arbeitet.

Das erfindungsgemäße Verfahren ist dadurch gekennzeichnet, daß bei plötzlichen Veränderungen (beispielsweise ruckartigen Lenkbewegungen) die zweiten Werte und bei langsamen Veränderungen (z.B. konstante Kreisfahrt) die ersten Werte als Werte der Querbeschleunigung ausgegeben werden.

Dabei kann je nach Ausführungsform der Erfindung vorgesehen sein, daß die aus der Lenkbewegung abgeleitete Größe dem jeweiligen Lenkwinkel oder der Änderung des Lenkwinkels mit der Zeit entspricht.

Das erfindungsgemäße Verfahren hat den Vorteil, daß sowohl für die Querbeschleunigung als auch für den Lenkwinkel preiswerte Sensoren verwendet werden können. Durch die zweifache Messung der Querbeschleunigung gegebene Redundanz wird die Sicherheit gegenüber Ausfall von einzelenen Elementen erhöht.

Bei einer Weiterbildung der Erfindung ist vorgesehen, daß die ersten Werte und die zweiten Werte von Zeit zur Zeit miteinander verglichen und auf Plausibilität geprüft werden. Dadurch ist eine einfache Überprüfung der Funktion der Sensoren möglich. Es kann bei Ausfall eines oder mehrerer Sensoren die berechnete Größe als Wert für die Querbeschleunigung ausgegeben werden.

Damit ist es möglich, relativ träge Sensoren für die Querbeschleunigung zu verwenden. Bei einer elektronisch gesteuerten Fahrwerksdämpfung wird somit verhindert, daß bei plötzlichen Lenkbewegungeen eine zuvor bei Geradeausfahrt eingestellte geringe Fahrwerksdämpfung erst mit einer durch die Beschleunigungssensoren verursachten Verzögerung auf einen höheren Wert gebracht wird.

Bei einer anderen Weiterbildung des erfindungsgemäßen Verfahrens ist vorgesehen, daß bei einer Fahrzeuggeschwindigkeit unterhalb einer vorgegebenen Mindestgeschwindigkeit der Sensor bzw. die Sensoren auf Null abgeglichen werden. Dieses ermöglicht die Verwendung von Sensoren für die Querbeschleunigung, bei welchen der Nullpunkt zeitlichen oder thermischen Änderungen unterworfen ist.

Außerdem kann bei dem erfindungsgemäßen Verfahren vorgesehen sein, daß bei einer Fahrzeuggeschwindigkeit, die mindestens gleich einer vorgegebenen Mindestgeschwindigkeit ist, und bei einer gemessenen Querbeschleunigung von Null ein Lenkwinkelsensor auf Null abgeglichen wird. Vorzugsweise wird bei einem Inkrementalgeber für den Lenkwinkel ein den absoluten Lenkwinkel enthaltender Zähler auf Null gesetzt.

Neben dem Preisvorteil eines inkrementalen Gebers weist diese Weiterbildung den Vorteil auf, daß eine Veränderung der Lenkradstellung bei Geradeauslauf (beispielsweise bei Spurfehlern) keine Auswirkung auf die Ermittlung der Querbeschleunigung mit dem erfindungsgemäßen Verfahren hat.

Wird zur Berechnung der Querbeschleunigung die Änderung des Lenkwinkels mit der Zeit - also die Lenkwinkelgeschwindigkeit - herangezogen, so können dafür ebenfalls einfache Sensoren verwendet werden, beispielsweise induktiv arbeitende Sensoren (Gleichstromgenerator).

Die Erfindung läßt zahlreiche Ausführungsformen zu. Eine davon ist schematisch in der Zeichnung anhand mehrerer Figuren dargestellt und nachfolgend beschrieben. Es zeigt:
- Fig. 1: ein Blockschaltbild einer Anordnung zur Durchführung des erfindungsgemäßen Verfahrens und
- Fig. 2: ein Flußdiagrmm, welches einen Rechner bei der Anordnung nach Fig. 1 zur Durchführung des erfindungsgemäßen Verfahrens befähigt.

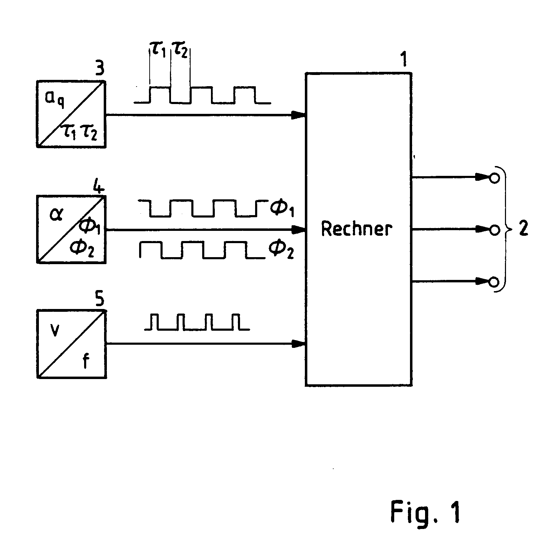

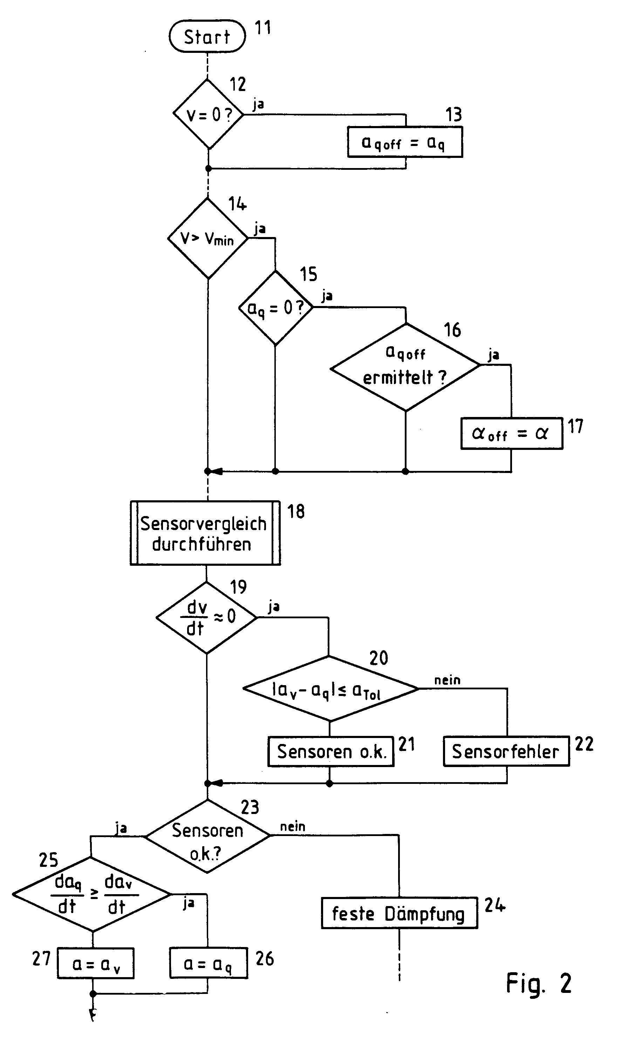

Der in Fig. 1 schematisch dargestellte Rechner 1 erhält von geeigneten Sensoren die gemessene Querbeschleunigung a_{q}, Impulse zur Erfassung des Lenkwinkels α und Impulse, welche die Fahrzeuggeschwindigkeit v darstellen. Außer dem in Fig. 2 näher erläuterten Programm zur Ermittlung der Querbeschleunigung können weitere Programme für den Rechner vorgesehen sein - beispielsweise ein Programm zur Steuerung der Fahrwerksdämpfung in Abhängigkeit von den ermittelten Beschleunigungswerten. Eine Reihe von Ausgängen 2 des Rechners sind mit geeigneten Stellgliedern verbunden, die in Fig. 1 nicht dargestellt sind.

Als Querbeschleunigungssensor 3 ist beispielsweise ein kapazitiver Sensor geeignet, bei welchem sich zwei Kapazitätswerte gegenläufig als Funktion der Beschleunigung verhalten. Ein derartiger Sensor ist in der Patentanmeldung P 39 19 190.7 der Anmelderin beschrieben. Eine geeignete Auswerteschaltung, welche ein Signal erzeugt, dessen Impulsbreiten und Impulsintervalle den Beschleunigungswert darstellen, ist in der Anmeldung P 39 19 191.5 der Anmelderin beschrieben.

Als Lenkwinkelsensor 4 wird ein an sich bekannter Inkrementalgeber verwendet, der zwei Impulsfolgen erzeugt, bei denen jeweils ein Impuls einen inkrementalen Drehwinkel bedeutet und aus deren Phasenverschiebung der Rechner 1 die Drehrichtung erkennen kann. Schließlich ist an den Rechner ein an sich bekannter Geschwindigkeitssensor 5 angeschlossen, der Impulse mit einer zur Fahrzeuggeschwindigkeit proportionalen Frequenz erzeugt. Dieser Sensor kann mit dem Tachometer kombiniert oder ein separater Sensor sein.

Die Darstellung des Programms gemäß Fig. 2 ist teilweise unterbrochen, da bei einer Realisierung des erfindungsgemäßen Verfahrens zwischen einzelnen Teilen des Programms andere Programme oder Programmteile abgearbeitet werden. Nach einem Start des Programms bei 11 erfolgt eine Verzweigung 12 in Abhängigkeit davon, ob die Fahrzeuggeschwindigkeit v = 0 ist. Bei v = 0, also bei Stillstand des Fahrzeugs, ist naturgemäß auch die Querbeschleunigung a_{q} = 0. Ein gegebenenfalls von null abweichendes Signal des Sensors wird als sogenannter Offset a_{qoff} gespeichert (13).

Bei 14 wird das Programm in Abhängigkeit davon verzweigt, ob eine vorgegebene Mindestgeschwindigkeit vₘᵢₙ überschritten ist. Ist dieses der Fall, wird bei 15 wiederum verzweigt - nämlich in Abhängigkeit davon, ob a_{q} = 0 ist. Wenn die Querbeschleunigung a_{q} = 0 ist, wird nochmals bei 16 in Abhängigkeit davon verzweigt, ob bereits ein Offset der Querbeschleunigung ermittelt wurde. Nur wenn diese drei Bedingungen erfüllt sind, wird bei 17 ein Offset α_{off} für den Lenkwinkel α gespeichert. Bei einem inkrementalen Sensor wird ein für die Speicherung des Lenkwinkels vorgesehener Speicher bei 17 auf 0 gesetzt.

Bei 18 wird in einem Unterprogramm die Möglichkeit gegeben, eine Sensorprüfung durchzuführen. Dieses kann nur erfolgen, wenn die Beschleunigung praktisch gleich null ist (Verzweigung 19). Dann wird bei 20 abgefragt, ob der Betrag der Abweichung zwischen der gemessenen Querbeschleunigung a_{q} und der aus der Geschwindigkeit v und dem Lenkwinkel α ermittelten Querbeschleunigung aᵥ kleiner bzw. gleich einer zulässigen Toleranz von a_{Tol} ist. Je nach dem Ergebnis dieses Vergleichs wird bei 21 ein Flag abgespeichert, das besagt, daß die Sensoren in Ordnung sind oder bei 22 ein Sensorfehler konstatiert.

Mit Hilfe der folgenden Programmteile wird einer der Werte a_{q} oder aᵥ für eine Verwendung zur Steuerung der Fahrwerksdämpfung ausgewählt. Dazu erfolgt zunächst bei 23 eine Verzweigung in Abhängigkeit davon, ob die Sensoren in Ordnung sind, ist dieses nicht der Fall, wird in einem Programmteil 24 die Fahrwerksdämpfung auf einen festen Wert (z. B. hohe Dämpfung) gestellt, der ein sicheres Fahren bei verschiedenen Situationen zuläßt.

Sind die Sensoren in Ordnung, verzweigt sich das Programm bei 25 in Abhängigkeit davon, ob die Änderungsgeschwindigkeit da_{q} der gemessenen Querbeschleunigung größer oder gleich der Änderungsgeschwindigkeit daᵥ der berechneten Querbeschleunigung ist. Ist dieses der Fall, wird als Beschleunigungswert a der Wert a_{q} ausgegeben bzw. einem zur Fahrwerksregelung dienenden Programm zugeführt.

Ist jedoch der berechnete Wert der Änderungsgeschwindigkeit daᵥ der Querbeschleunigung größer, so wird der berechnete Wert aᵥ dem weiteren Programm zugrundegelegt. Damit wird gewährleistet, daß von der Fahrwerksregelung stets die jeweils straffere Einstellung des Fahrwerks vorgenommen wird. Ist beispielsweise der Fahrer eines Kraftfahrzeugs nach einer Geradeausfahrt zu einem plötzlichen Ausweichmanöver gezwungen, steigt durch die Lenkbewegung der berechnete Wert aᵥ ebenfalls sehr schnell an, während durch die Trägheit der Sensoren der gemessene Wert a_{q} zunächst kleiner bleibt. Trotzdem wird das Fahrwerk auf einen zur Durchführung des Ausweichmanövers erforderlichen höheren Dämpfungswert eingestellt.

## Patentansprüche

1. Verfahren zur Ermittlung der Querbeschleunigung eines Kraftfahrzeuges, vorzugsweise zur elektronischen Steuerung der Fahrwerksdämpfung, bei welchem erste Werte (a_{q}) der Querbeschleunigung mit Hilfe eines oder mehrerer Beschleunigungssensoren gemessen werden und zweite Werte (aᵥ) der Beschleunigung aus der jeweiligen Fahrzeuggeschwindigkeit und einer aus der Lenkbewegung abgeleiteten Größe berechnet werden, dadurch gekennzeichnet, daß bei plötzlichen Veränderungen (beispielsweise ruckartige Lenkbewegungen) die zweiten Werte (aᵥ) und bei langsamen Veränderungen (z. B. konstante Kreisfahrt) die ersten Werte (a_{q}) als Werte der Querbeschleunigung ausgegeben werden.

2. Verfahren nach Anspruch 1, dadurch gekennzeichnet, daß die aus der Lenkbewegung abgeleitete Größe dem jeweiligen Lenkwinkel entspricht.

3. Verfahren nach Anspruch 2, dadurch gekennzeichnet, daß die ersten Werte (a_{q}) und die zweiten Werte (aᵥ) von Zeit zu Zeit miteinander verglichen und auf Plausibilität geprüft werden.

4. Verfahren nach Anspruch 3, dadurch gekennzeichnet, daß bei Ausfall eines oder mehrerer Sensoren die berechnete Größe (aᵥ) als Wert für die Querbeschleunigung ausgegeben wird.

5. Verfahren nach einem der vorhergehenden Ansprüche, dadurch gekennzeichnet, daß bei einer Fahrzeuggeschwindigkeit unterhalb einer vorgegebenen Mindestgeschwindigkeit der Beschleunigungssensor bzw. die Beschleunigungssensoren auf Null abgeglichen werden.

6. Verfahren nach einem der vorhergehenden Ansprüche, dadurch gekennzeichnet, daß bei einer Fahrzeuggeschwindigkeit, die mindestens gleich einer vorgegebenen Mindestgeschwindigkeit ist, und bei einer gemessenen Querbeschleunigung von Null ein Lenkwinkelsensor auf Null abgeglichen wird.

7. Verfahren nach Anspruch 6, dadurch gekennzeichnet, daß bei einem Inkrementalgeber für den Lenkwinkel ein den absoluten Lenkwinkel enthaltener Zähler auf Null gesetzt wird.

8. Verfahren nach Anspruch 1, dadurch gekennzeichnet, daß die aus der Lenkbewegung abgeleitete Größe der Änderung des Lenkwinkels mit der Zeit entspricht.

## Claims

1. A process for determining the transverse acceleration of a motor vehicle, preferably for electronically controlling the damping of the vehicle chassis, in which first values (a_{q}) of the transverse acceleration are measured with the aid of one or more acceleration sensors and second values (aᵥ) of the acceleration are calculated from the respective vehicle speed and from a quantity derived from the steering movement, characterised in that when there are sudden changes (for example jerky steering movements) the second values (aᵥ) are output as values of the transverse acceleration and when there are slow changes (e.g. constant travel in a circle) the first values (a_{q}) are output as values of the transverse acceleration.

2. A process according to claim 1, characterised in that the quantity derived from the steering movement corresponds to the respective steering angle.

3. A process according to claim 2, characterised in that the first value (a_{q}) and the second value (aᵥ) are compared with each other and checked for plausibility from time to time.

4. A process according to claim 3, characterised in that on the failure of one or more sensors the calculated quantity (aᵥ) is output as the value for the transverse acceleration.

5. A process according to any one of the preceding claims, characterised in that at a vehicle speed less than a predetermined minimum speed the acceleration sensor or the acceleration sensors are adjusted to zero.

6. A process according to any one of the preceding claims, characterised in that at a vehicle speed which is at least equal to a predetermined minimum speed and at a measured transverse acceleration of zero a steering angle sensor is adjusted to zero.

7. A process according to claim 6, characterised in that at an incremental transmitter for the steering angle a counter containing the absolute steering angle is set to zero.

8. A process according to claim 1, characterised in that the quantity derived from the steering movement corresponds to the change in the steering angle with time.

## Revendications

1. Procédé pour déterminer l'accélération transversale d'un véhicule automobile, de préférence en vue de la commande électronique de l'amortissement de la suspension, selon lequel des premières valeurs (a_{q}) de l'accélération transversale sont mesurées à l'aide d'un ou plusieurs capteur(s) d'accélération et des secondes valeurs (aᵥ) de l'accélération sont calculées à partir de la vitesse instantanée du véhicule et d'une grandeur dérivée du mouvement de braquage, caractérisé en ce que, en cas de changements brusques (de mouvements de braquage brusques par exemple), les secondes valeurs (aᵥ) sont délivrées en tant que valeurs de l'accélération transversale et, en cas de changements lents (lors d'une marche constante suivant un trajet circulaire par exemple), les premières valeurs (a_{q}) sont délivrées en tant que valeurs de l'accélération transversale.

2. Procédé selon la revendication 1, caractérisé en ce que la grandeur dérivée du mouvement de braquage correspond à l'angle de braquage instantané.

3. Procédé selon la revendication 2, caractérisé en ce que les premières valeurs (a_{q}) et les secondes valeurs (aᵥ) sont comparées entre elles de temps en temps et soumises à un contrôle de vraisemblance.

4. Procédé selon la revendication 3, caractérisé en ce que, en cas de défaillance d'un ou plusieurs capteurs, la grandeur calculée (aᵥ) est délivrée en tant que valeur pour l'accélération transversale.

5. Procédé selon une des revendications précédentes, caractérisé en ce que le capteur d'accélération ou les capteurs d'accélération est ou sont ajusté(s) à zéro à une vitesse du véhicule inférieure à une vitesse minimale préfixée.

6. Procédé selon une des revendications précédentes, caractérisé en ce qu'un capteur d'angle de braquage est ajusté à zéro à une vitesse du véhicule au moins égale à une vitesse minimale préfixée et alors que l'accélération transversale mesurée est nulle.

7. Procédé selon la revendication 6, caractérisé en ce que, en présence d'un transmetteur incrémentiel pour l'angle de braquage, un compteur contenant l'angle de braquage absolu est mis à zéro.

8. Procédé selon la revendication 1, caractérisé en ce que la grandeur dérivée du mouvement de braquage correspond au changement de l'angle de braquage en fonction du temps.
